# EUROPEAN PATENT APPLICATION

(11) **EP 3 800 485 A1**
(43) Date of publication of application: **07.04.2021**
(21) Application number: 19200784.7
(22) Date of filing: 01.10.2019
(51) Int. Cl.: G01S 13/32, G01S 7/35

(54) **FMCW RADAR**

(71) Applicant: Imec VZW, 3001 Leuven (BE)
(72) Inventor: VAESEN, Kristof, 3001 Leuven (BE); GUERMANDI, Davide, 3001 Leuven (BE); VISWESWARAN, Akshay, 3001 Leuven (BE); BREBELS, Steven, 3001 Leuven (BE); WAMBACQ, Pierre, 3001 Leuven (BE)
(74) Representative: AWA Sweden AB

(57) **Abstract**

An FMCW, frequency-modulated continuous-wave, radar
system (100, 200, 300), comprises a transmitter (102, 202, 302a, 302b) connectable to a transmitting antenna (108, 302a, 302b) and configured to transmit a frequency-modulated RF signal (110); and a receiver (106, 306a, 306b) connectable to a receiving antenna (108, 308a, 308b), said receiver (106, 306a, 306b) comprising a mixer stage (124, 324a, 324b) configured to mix a received reflected version (104) of the transmitted said RF signal (110) with a copy (118) of said transmitted RF signal, wherein said mixer stage (124, 324a, 324b) of said receiver (106, 306a, 306b) has a single input (122, 322a, 322b) connectable to said receiving
antenna (108, 308a, 308b), said mixer stage (124, 324a, 324b) being configured to receive both said reflected version (114) of said transmitted RF signal (110) and said copy (118, 318a, 318b) of said transmitted RF signal (110) through said single input (122, 322a, 322b). The radar system may be a MIMO radar system.

## Description

### Technical field

The present inventive concept relates to a frequency-modulated continuous-wave (FMCW) radar system, a FMCW multiple-input multiple-output (MIMO) radar system, and a method of operating an FMCW radar system.

### Background

A typical FMCW radar system comprises a transmitter and a receiver. The transmitter may be configured to transmit a frequency-modulated RF signal, typically a so-called chirp signal exhibiting a frequency sweep in time. The transmitted signal may be reflected by an object of interest, so that the receiver receives a delayed and attenuated version of the transmitted RF signal.

At the receiver, a down-conversion mixer may mix a copy of the transmitted signal with the received, delayed, chirp. The delay of the received signal with respect to the transmitted signal gives rise, due to the frequency modulation of the signal, to a frequency difference that is related to the distance to the object. In the typical case of a linear frequency ramp, the frequency distance will be proportional to the distance to the object.

A FMCW radar system may be a MIMO radar system comprising a plurality of transmitters and a plurality of receivers.

### Summary

An objective of the present inventive concept is to provide a simplified FMCW radar system.

According to a first aspect of the present inventive concept there is provided an FMCW, Frequency-Modulated-Continuous-Wave, radar system, comprising a transmitter connectable to a transmitting antenna and configured to transmit a frequency-modulated RF signal; and a receiver connectable to a receiving antenna, the receiver comprising a mixer stage configured to mix a received reflected version of the transmitted RF signal with a copy of the transmitted RF signal, wherein the mixer stage of the receiver has a single input connectable to the receiving antenna, the mixer stage being configured to receive both the reflected version of the transmitted RF signal and the copy of the transmitted RF signal through the single input.

This allows the mixer stage to receive the copy of the transmitted over the air through direct coupling of the transmitting antenna to the receiving antenna.

Direct coupling between the transmitter antenna and receiver antenna, so-called "spillover", is conventionally an unwanted signal that needs to be suppressed to be as small as possible, since it could saturate the receiver and/or give rise to a ghost object. Here, instead, the spillover between the transmitting antenna and the receiving antenna may be used as a local oscillator (LO) signal for the receiver. Thus, a separate wired arrangement for transferring the copy of the transmitted signal from the transmitter to the receiver may be dispensed with.

Moreover, the transmitting and receiving antennas may hereby be placed closer together due to not requiring distance to reduce spillover. This allows for a more compact system, saving on, e.g., chip area if the case of the radar system being a single-chip radar system, where otherwise a larger area would be required than what would be required by the circuitry alone.

Further, an otherwise often power-hungry and complex, especially at high frequencies, distribution of the LO signal, may be dispensed with, which reduces power consumption.

Further, this allows a multiplier, e.g., doubler or tripler stage, to be placed after the PA stage of the transmitter, allowing operation at higher frequency than otherwise possible.

The present inventive concept may be used with a low-noise amplifier (LNA). However, care must be taken so that the spillover does not saturate the LNA. Therefore, the present inventive concept is particularly useful for short range applications where reduced gain and increased noise figure due to the lack of a low-nose amplifier (LNA) are acceptable. Further, it is especially of interest for applications close to or above ft, where no LNA can be used anyway.

The radar system may be a millimeter-wave radar system.

The radar system may be a 2x2 MIMO radar system.

According to one embodiment, the transmitter comprises a frequency multiplication stage placed after a power amplifier, PA, stage of the transmitter.

Since the LO and RF signals combine in the air, the signal may be down-converted using a simple diode mixer or square law mixer device, which simplifies the required circuitry.

Thus, according to one embodiment, the mixer stage of the receiver comprises a square-law mixer; and
according to one embodiment, the mixer stage of the receiver comprises a diode mixer.

According to a second aspect of the present inventive concept there is provided FMCW MIMO, Frequency-Modulated-Continuous-Wave Multiple-Inout-Multiple-Output, radar system, comprising a first transmitter connected to a first transmitting antenna; a second transmitter connected to a second transmitting antenna; a first receiver connected to a first receiving antenna; and a second receiver connected to a second receiving antenna; wherein the first transmitter and the second transmitter each are configured to transmit a respective frequency-modulated RF signal having a wavelength A; the first receiving antenna and the second receiving antenna are placed *λ*/2 from each other and *λ*/4 from the first transmitting antenna; the second transmitting antenna is placed *λ*/2 from the first transmitting antenna and further than *λ*/4 from each of the first receiving antenna and the second receiving antenna; each of the first receiver and the second receiver comprises a respective mixer stage configured to mix a received reflected version of the transmitted RF signals with a copy of the transmitted RF signal; and each respective the mixer stage of the first receiver and the second receiver has a single input connected to the respective receiving antenna, each the mixer stage being configured to receive both the reflected version of the transmitted RF signal and the copy of the transmitted RF signal through the said single input.

This aspect may generally present the same or corresponding advantages as the first aspect. Embodiments presented above in conjunction with the first aspect are compatible with this second aspect.

In other words, the two receiving antennas are placed *λ*/2 apart and the transmitting antenna is placed in-between, at a distance of *λ*/4 to both transmitting antennas. With the first of the two transmitters thus being placed close to each of the two receivers, a strong spillover signal is received at each of the receiving antennas to act an LO for down-conversion at each of the receivers. Meanwhile, the second transmitting antenna is placed *λ*/2 from the first transmitting antenna and thus further away from each of the receiving antennas than the first transmitting antenna. The spillover caused by this transmitter will thus be much lower than the one of the first and thus not dominate the down-conversion.

During operation, the phase of the first transmitter may be kept fixed, and thus the phase of the respective LOs of the first receiver and the second receiver as well, while the phase of second transmitter can be swapped every frequency sweep, e.g., chirp. Thus, it may be avoided that a phase change of one of the transmitters would also change the phase for the receivers. This allows for a MIMO system, in particular a 2x2 MIMO system, to be realized according to the present inventive concept.

According to one embodiment, the second transmitter is configured for phase-swapping the RF signal transmitted by said second transmitter 180 degrees between transmissions.

According to a third aspect of the present inventive concept, there is provided method of operating a FMCW, Frequency-Modulated-Continuous-Wave, radar system, comprising a transmitter transmitting a frequency-modulated RF signal through a transmitting antenna; and a mixer stage, comprised in a receiver connected to a receiving antenna, mixing a received reflected version of the transmitted said RF signal with a copy of said transmitted RF signal, wherein said mixer stage has a single input, receiving both said reflected version of the transmitted said RF signal and said copy of said transmitted RF signal through said single input connected to said receiving antenna.

This aspect may generally present the same or corresponding advantages as the first aspect. Embodiments presented above in conjunction with the first aspect are compatible with this third aspect.

### Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1 and Fig. 2 schematically show Frequency-Modulated-Continuous-Wave radar systems.
Fig. 3 shows, schematically, a Frequency-Modulated-Continuous-Wave (FMCW) multiple-input multiple-output (MIMO) radar system.

### Detailed description

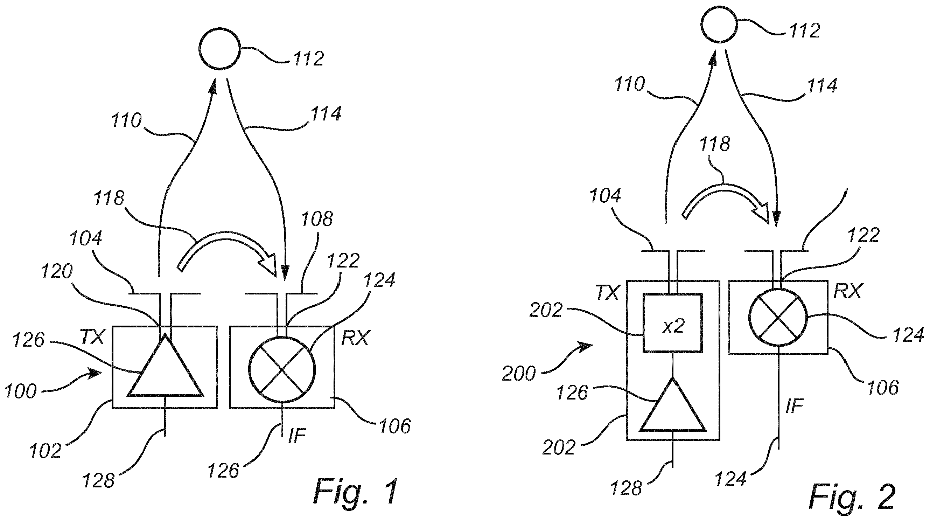

Fig. 1 schematically shows a Frequency-Modulated-Continuous-Wave radar system 100 comprising a transmitter 102 and a receiver 106. The system may, for example, be implemented on a single chip.

The transmitter 102 is connectable to a transmitting antenna 104 through an output 120 and the receiver 106 is connectable to a receiving antenna 108.

The receiver 106 comprises a mixer stage 124 having a single input 122 connectable to the receiving antenna 108. The mixer stage 124 may comprise a diode mixer, or, more generally, any square-law mixer device.

The transmitter 102 may comprise a power amplifier (PA) stage 124 for amplifying a local oscillator (LO) signal 128, which may be input to the transmitter 102, as shown, or, alternatively, locally generated in the transmitter 102 by a local oscillator (LO) (not shown).

The transmitter 102 is configured to transmit, during operation of the radar system 100, a frequency-modulated continuous wave RF signal 110 through the transmitting antenna 104. The frequency-modulated continuous wave signal 110 typically exhibits a linear frequency sweep.

The transmitted signal 110 may be reflected by an object 112, resulting in a reflected signal 114. The reflected signal 114 may reach the receiving antenna 108. Concurrently, a copy of the transmitted signal 110 directly reaches the receiving antenna 108, as illustrated by an arrow 118. This is often referred to as spillover.

Thus, both the reflected signal 112 and the copy 118 of the transmitted signal 110 are received by the mixer stage 124 through its single input 122.

At the mixer stage 124, using principles for FMCW radar known per se, the reflected signal 112 and the copy 118 of the transmitted signal 110 are mixed, resulting, as a mixing product, in an intermediate-frequency (IF) signal 126 having a frequency *f_{IF}* corresponding to the absolute value of the difference *f_{dir}* - *f_{refl}* between the instantaneous frequency *f_{dir}* of the copy 118 of the transmitted signal 110 and the instantaneous frequency *f_{refl}* of the reflected signal 112. Due to the delay of the reflected signal, *f_{IF}* will be related to the distance to the object 112. In particular, if the transmitted signal 110 exhibits a linear frequency sweep, *f_{IF}* will be proportional to the distance to the object 112.

Fig. 2 schematically shows a Frequency-Modulated-Continuous-Wave radar system 200 comprising a transmitter 202 and a receiver 106.

Compared to the system 100 of Fig. 1, the transmitter 202 of Fig. 2 comprises a multiplier stage 202 for multiplying the frequency of the transmitted signal 110. The multiplier stage 202 is placed after the power amplifier stage 126 and before the antenna transmitting antenna 104.

The multiplier stage 202 may be, as depicted, a doubler stage for doubling the frequency of the LO signal 128 as amplified by the power amplifier stage 126, a tripler stage, or any other frequency multiplication, i.e., multiplier.

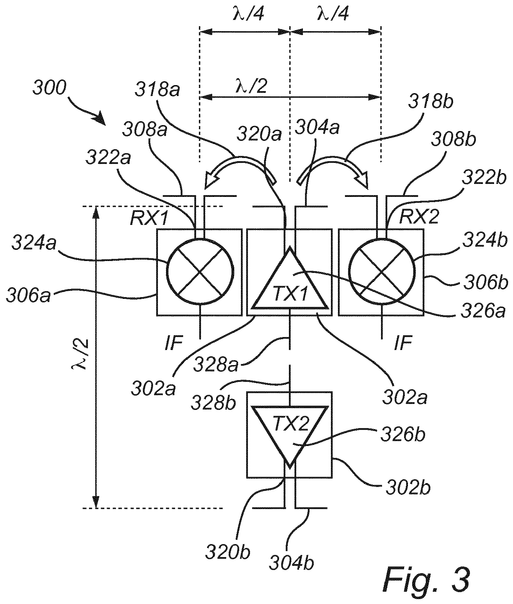

Fig. 3 shows, schematically, a Frequency-Modulated-Continuous-Wave (FMCW) multiple-input multiple-output (MIMO) radar system 300 comprising a first transmitter 302a, a second transmitter 302b, a first receiver 306a, and a second receiver 306b. Each of the first transmitter 302a and the second transmitter 302b is configured to transmit a respective frequency-modulated RF signal having an in-air wavelength λ. Each respective frequency-modulated RF signal typically exhibits a linear frequency sweep.

The second transmitter 302b may be configured for phase-swapping the RF signal transmitted by the second transmitter 302b 180 degrees between transmissions, e.g., between frequency sweeps.

The first transmitter 302a is connectable to a first transmitting antenna 304a through an output 320a and the second transmitter 302b is connectable to a second transmitting antenna 304b. The first receiver 306a is connectable to a first receiving antenna 308a and the second receiver 306b is connectable to a second receiving antenna 306b. The first transmitting antenna 304a, the second transmitting antenna 304b, the first receiving antenna 308a, and the second receiving antenna 308b may be comprised in the radar system 300.

As indicated, the first receiving antenna 308a and the second receiving antenna 308b are placed half a wavelength, λ/2, from each other. Further, each of the first receiving antenna 308a and the second receiving antenna 308b is placed a quarter wavelength, λ/4, from the first transmitting antenna 304a. Further, the second transmitting antenna 304b is placed half a wavelength, λ/2, from the first transmitting antenna and further than a quarter wavelength, λ/4, from each of the first receiving antenna 308a and the second receiving antenna 308b.

Each of the first receiver 306a and the second receiver 306b comprises a respective mixer stage 324a, 324b, each having a respective single input 322a, 322b connectable to, respectively, the first receiving antenna 308a and the second receiving antenna 308b. Each mixer stage 324a, 324b may comprise a diode mixer, or, more generally, any square-law mixer device.

Each of the first transmitter 302a and the second transmitter 302b may comprise a respective power amplifier (PA) stage 324a, 324b for amplifying respective local oscillator (LO) signal 328a, 328b input to the respective transmitter 302a, 302b, as shown, or locally generated in the respective transmitter 302a, 302b by a respective local oscillator (LO) (not shown).

The transmitted signals of the first transmitter 302a and of the second transmitter 302b may be reflected by an object (not shown), resulting in a reflected signal, which may reach the first receiving antenna 308a and the second receiving antenna 308b. Concurrently, copies of the transmitted signal by the first transmitter 302a directly reaches the first receiving antenna 308a and the second receiving antenna 308b through the air, as illustrated by, respectively, arrows 318a and 318b.

Thus, both the reflected signals and the respective copy 318a, 318b of the transmitted signal from the first transmitter 324a are received by the respective mixer stage 324a, 324b through its respective single input 322a, 322b.

At each mixer stage 324a, 324b, using principles for FMCW MIMO radar known per se, the reflected signals and the respective copy 318a, 318b of the transmitted signals are mixed, resulting, as a mixing product, in an intermediate-frequency (IF) signal having a frequency *f_{IF}* corresponding to the absolute value of the difference *f_{dir} - f_{refl}* between the instantaneous frequency *f_{dir}* of the respective copy 318a, 318b of the transmitted signals and the instantaneous frequency *f_{refl}* of the reflected signals , wherein *f_{IF}* will be related to the distance to the object.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An FMCW, frequency-modulated continuous-wave, radar system (100, 200, 300), comprising:
a transmitter (102, 202, 302a, 302b) connectable to a transmitting antenna (104, 304a, 304b) and configured to transmit a frequency-modulated RF signal (110); and
a receiver (106, 306a, 306b) connectable to a receiving antenna (108, 308a, 308b), said receiver (106, 306a, 306b) comprising a mixer stage (124, 324a, 324b) configured to mix a received reflected version (104) of the transmitted said RF signal (110) with a copy (118) of said transmitted RF signal,
wherein said mixer stage (124, 324a, 324b) of said receiver (106, 306a, 306b) has a single input (122, 322a, 322b) connectable to said receiving antenna (108, 308a, 308b), said mixer stage (124, 324a, 324b) being configured to receive both said reflected version (114) of said transmitted RF signal (110) and said copy (118, 318a, 318b) of said transmitted RF signal (110) through said single input (122, 322a, 322b).

2. The radar system (100, 200, 300) of claim 1, wherein said transmitter (102, 202, 302a, 302b) comprises a frequency multiplication stage (202) placed after a power amplifier, PA, stage (126) of said transmitter.

3. The radar system (100, 200, 300) of any one of claims 1-2, wherein said mixer stage (124, 324a, 324b) of said receiver (106, 306a, 306b) comprises a square-law mixer.

4. The radar system (100, 200, 300) of any one of claims 1-2, wherein said mixer stage (124, 324a, 324b) of said receiver (106, 306a, 306b) comprises a diode mixer.

5. An FMCW MIMO, frequency-modulated continuous-wave multiple-input multiple-output, radar system (300), comprising:
a first transmitter (302a) connected to a first transmitting antenna (304a);
a second transmitter (302b) connected to a second transmitting antenna (304b);
a first receiver (306a) connected to a first receiving antenna (308a); and
a second receiver (306b) connected to a second receiving antenna (308b);
wherein:
said first transmitter (302a) and said second transmitter (302b) each are configured to transmit a respective frequency-modulated RF signal having a wavelength A;
said first receiving antenna (308a) and said second receiving antenna (308b) are placed *λ*/2 from each other and *λ*/4 from said first transmitting antenna (304a);
said second transmitting antenna (308a) is placed *λ*/2 from said first transmitting antenna (308b) and further than λ/4 from each of said first receiving antenna (308a) and said second receiving antenna (308b);
each of said first receiver (306a) and said second receiver (306b) comprises a respective mixer stage (324a, 324b) configured to mix a received reflected version of the transmitted RF signals with a copy (318a, 318b) of said transmitted RF signal; and
each respective said mixer stage (324a, 324b) of said first receiver (306a) and said second receiver (306b) has a single input (322a, 322b) connected to the respective receiving antenna (308a, 308b), each said mixer stage (324a, 324b) being configured to receive both said reflected version of said transmitted RF signal and said copy (318a, 318b) of said transmitted RF signal through said single input (324a, 324b).

6. The radar system (300) of claim 6, wherein said second transmitter (302b) is configured for phase-swapping the RF signal transmitted by said second transmitter 180 degrees between transmissions.

7. A method of operating a FMCW, frequency-modulated continuous-wave, radar system (100, 200, 300), comprising:
a transmitter (102, 202, 302a, 302b) transmitting a frequency-modulated RF signal (110) through a transmitting antenna (104, 304a, 304b); and
a mixer stage (124, 324a, 324b), comprised in a
receiver (106, 306a, 306b) connected to a receiving
antenna (108, 308a, 308b), mixing a received reflected version (114) of the transmitted said RF signal (110) with a copy (118, 318a, 318b) of said transmitted RF signal (110),
wherein said mixer stage (124, 324b, 324b) has a single
input (122, 322a, 322b), receiving both said reflected version (114) of the transmitted said RF signal (110) and said copy (118) of said transmitted RF signal through said single input (122, 322a, 322b) connected to said receiving antenna (108, 308a, 308b).
